# EUROPEAN PATENT SPECIFICATION

(11) **EP 3 376 322 B1**
(45) Date of publication and mention of the grant of the patent: **17.08.2022**
(21) Application number: 18161639.2
(22) Date of filing: 14.03.2018
(51) Int. Cl.: G05B 19/408, G05B 19/418, B25J 9/16

(54) **CONTROL SYSTEM, CONTROLLER, AND CONTROL METHOD**
STEUERUNGSSYSTEM, STEUERGERÄT UND STEUERUNGSVERFAHREN
SYSTÈME DE COMMANDE, ORGANE DE COMMANDE ET PROCÉDÉ DE COMMANDE

(30) Priority: 16.03.2017 JP 2017051289
(43) Date of publication of application: 19.09.2018
(73) Proprietor: Kabushiki Kaisha Yaskawa Denki, Kitakyushu-shi, Fukuoka 806-0004 (JP)
(72) Inventor: OJIMA, Masao, Kitakyushu-shi, Fukuoka 806-0004 (JP); TAKANISHI, Kanji, Kitakyushu-shi, Fukuoka 806-0004 (JP); UCHIDA, Yutaro, Kitakyushu-shi, Fukuoka 806-0004 (JP)
(74) Representative: Grünecker Patent- und Rechtsanwälte PartG mbB

(56) References cited:
- EP-A2- 1 643 327
- JP-A- H0 947 990
- US-A1- 2012 109 361
- US-A1- 2013 166 068
- US-A1- 2016 023 355

## Description

### TECHNICAL FIELD

The present disclosure relates to a control system, a controller, a control method, and in particular to control of a multi-axis robot.

### BACKGROUND

Japanese Unexamined Patent Publication No. 2013-134786 discloses a method of converting a numerical control language program configured to be executed by a computer of a numerically controlled machine tool to a robot language program to record the robot language program in a mass storage device, and executing the robot language program using a robot control unit connected to the mass storage device and a robot.

Patent Application US 2016/0023355 A1 relates to robot control. Multiple robots are coordinated so as to work in a cooperative manner, wherein a working robot A is a master and sends operation instructions to handling robots (slaves) B and C. Master and slave robots are connected and communicate via their respective controllers 16A to 16C. To coordinate the master robot and the first and second slave robots, the master robots stores a first and a second transformation matrix, each representing positional relationships between the master and first slave (first matrix), and between the first and second slave (second matrix). The master sends a first command to the first slave to operate based on the first transformation matrix. The master then sends a second command to the second slave to operate based on the first and second transformation matrix. Then, master, first, and second robot perform a cooperative operation. Each controller 16A to 16C are connected to teaching pendants 18A to 18C, by which an operator may provide settings to each robot, so as to e.g. switch a robot from master/slave to slave/master.

Patent Application EP 1 643 327 A2 relates to industrial control in order to coordinate the motion between different coordinate systems through pre-defined and user-defined transforms written in industrial control languages. Data are accepted in one coordinate system and transformed to a different coordinate system. Suitable coordinate systems among which the transformation may be performed, include Cartesian, pre-defined non-Cartesian, and user-defined non-Cartesian coordinate systems. The transformations may be programmed in any industrial control language. Instructions for the motion include source and target coordinate systems and the transformation between them, and to move the target system accordingly.

Patent Application US 2013/0166068 A1 relates to operation of machine tools by robots executing numerical control (NC) programs. A machine tool program is converted in a NC programming language to permit a robot controller to execute the program. A robot controller converts the NC program into robot language according to a conversion configuration table, and uses the converted language as a pseudo program data, internally stored in a data memory within the robot controller. Each M-code (Miscellaneous code) in the NC program is executed as a sub-program call using the robot language. The content of the sub-programs can be freely defined and programmed by the user and, therefore, can be customized for the specific application.

### SUMMARY

It is an object of the present disclosure to provide a control system, a control method, and a controller that are effective in enabling operation programming of various robots with various user interfaces.

The invention is defined by the features of the independent claims, with preferred embodiments being specified in the dependent claims. Embodiments not covered by the scope of the claims should be understood as examples useful for understanding the invention.

According to the present disclosure, provided are a control system, a control method, and a controller that arc effective in enabling operation programming of various robots with various user interfaces.

### BRIEF DESCRIPTION OF THE DRAWINGS

FIG. 1 is a block diagram showing a functional configuration of a control system;
FIG. 2 is a block diagram showing a hardware configuration of a control system;
FIG. 3 is a flowchart showing a control procedure of a first controller;
FIG. 4 is a flowchart showing a control procedure of a second controller; and
FIG. 5 is a flowchart showing a procedure for registering a coordinate conversion program.

### DETAILED DESCRIPTION

Hereinafter, embodiments will be described in detail with reference to the drawings. Note that in the description, elements having the same element or the same function are denoted by the same reference numerals, and duplicate explanation is omitted.

### [Control System]

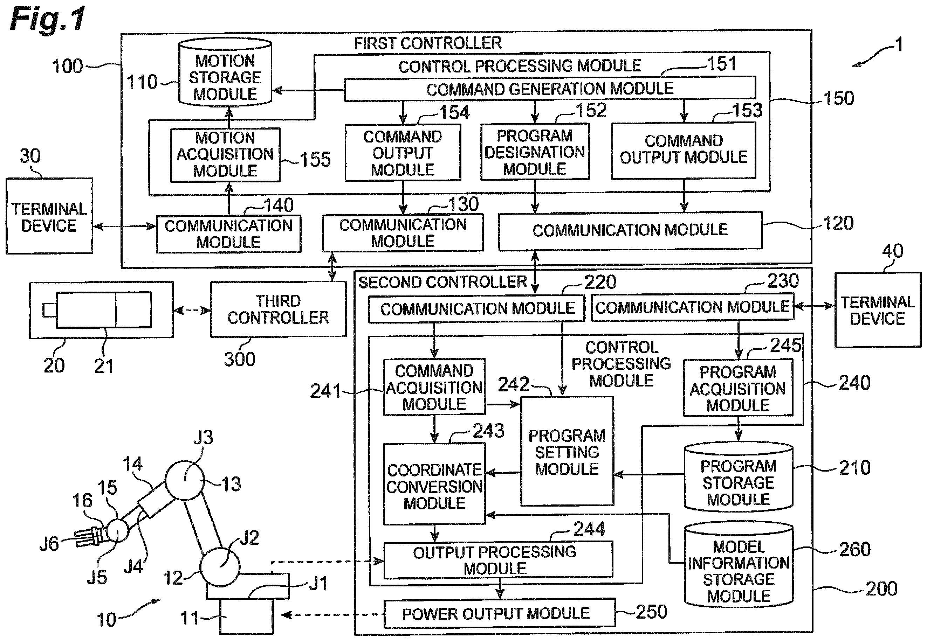

The control system 1 according to the present embodiment controls two or more types of controlled objects so as to execute a series of processes. As shown in FIG. 1, the control system 1 includes a first controller 100 that controls two or more controlled objects, a second controller 200 that controls a multi-axis robot 10 in accordance with a command from the first controller, and a third controller 300 that controls a peripheral device 20 of the multi-axis robot 10 in accordance with a command from the first controller.

The multi-axis robot 10 is, for example, a serial linked vertically articulated robot, and includes two or more (for example, six axes) joint axes J1 to J6 and two or more actuators 11 to 16 for driving the respective joint axes J1 to J6. The peripheral device 20 includes, for example, a servomotor 21, and operates it as a power source. For example, the peripheral device 20 holds a workpiece which is a target of a job performed by the multi-axis robot 10 and adjusts the position and attitude of the workpiece in cooperation with the job performed by the multi-axis robot 10.

The first controller 100 is, for example, a PLC (Programmable Logic Controller), and executes two or more control processes via the second controller 200 and the third controller 300 in a predetermined order according to a predetermined signal input. In each control process, the first controller 100 outputs an operation command (for example, a target value of position control) to the second controller 200 and the third controller 300 at a predetermined control cycle. The first controller 100 may be of any type as long as it controls two or more controlled objects, and may be a so-called machine controller.

The first controller 100 includes a motion storage module 110, communication modules 120, 130, and 140, and a control processing module 150 as a functional configuration (hereinafter referred to as "functional module").

The motion storage module 110 stores information defining the operation content of the multi-axis robot 10 and the peripheral device 20 (hereinafter referred to as "motion information"). The motion information includes, for example, information for designating a coordinate conversion program used for controlling the multi-axis robot 10 (hereinafter referred to as "program designation information"), and a list in which operation commands to be output to the multi-axis robot 10 and the peripheral device 20 are arranged in chronological order.

The communication module 120 inputs and outputs information to and from the second controller 200. The communication module 130 inputs and outputs information to and from the third controller 300. The communication module 140 inputs and outputs information to and from a terminal device 30. The terminal device 30 is used for programming motion information.

The control processing module 150 is configured to output the program designation information and the first operation command for operating the multi-axis robot 10 to the second controller 200 via the communication module 120, and output the second operation command to the third controller 300 via the communication module 130.

For example, the control processing module 150 includes a command generation module 151, a program designation module 152, command output modules 153 and 154, and a motion acquisition module 155 as further divided functional modules.

The command generation module 151 acquires the program designation information from the motion information stored in the motion storage module 110, and generates the first operation command and the second operation command for each control cycle based on the motion information. The program designation information is, for example, the identification number of the coordinate conversion program. The first operation command is numerical data for specifying the position and attitude target value of the tip portion of the multi-axis robot 10 in a coordinate system for system control (hereinafter referred to as "first coordinate system") such as the orthogonal coordinate system. The second operation command is, for example, numerical data that defines an angle target value of the servomotor 21 of the peripheral device 20.

The program designation module 152 outputs the program designation information to the second controller 200 via the communication module 120. The command output module 153 outputs the first operation command to the second controller 200 via the communication module 120. The command output module 154 outputs the second operation command to the third controller 300 via the communication module 130.

The motion acquisition module 155 acquires motion information programmed with a predetermined language (hereinafter referred to as "first programming language") from the terminal device 30 via the communication module 140, and stores the motion information in the motion storage module 110. The first programming language is, for example, an industrial programming language. Specific examples of industrial programming languages include LD (Ladder Diagram), FBD (Function Block Diagram), SFC (Sequential Function Chart), IL (Instruction List), and ST (Structured Text).

The second controller 200 is, for example, a robot controller, and controls the multi-axis robot 10 in accordance with a command from the first controller 100. The second controller 200 includes a program storage module 210, a model information storage module 260, communication modules 220 and 230, a control processing module 240, a power output module 250 as a functional configuration (hereinafter referred to as "functional module")

The program storage module 210 stores two or more coordinate conversion programs. The coordinate conversion programs may be designated in the motion information programmed by the first programming language, and is an application programming interface (API) for converting the first coordinate system to a coordinate system for control of the multi-axis robot 10 (for example, joint coordinate system of joint axes J1 to J6, hereinafter referred to as "second coordinate system"). The coordinate conversion programs are programmed by a second programming language different from the first programming language for programming the content of control of the first controller 100. The coordinate conversion programs may be hard-coded by the second programming language. Hard coding means that the content of coordinate conversion is coded in a format that cannot be edited by the user. Specific examples of the second programming language include C language, Basic, assembler, Pascal, and the like.

Two or more coordinate conversion programs may include two or more coordinate conversion programs corresponding to two or more types of first controllers 100 having different reference coordinate systems respectively. The coordinate conversion programs may include two or more coordinate conversion programs corresponding to a plurality of types of multi-axis robots 10 respectively. In addition, the coordinate conversion programs may include two or more coordinate conversion programs each corresponding to the combination of the types of first controllers 100 and the types of multi-axis robots 10 respectively.

The model information storage module 260 stores model information of the multi-axis robot 10. The model information includes numerical data indicating the mechanical parameters and the control parameters of the multi-axis robot 10, such as the structure, size, mass, etc. of the multi-axis robot 10, and the rated output and the control gain of the actuators 11 to 16.

The model information storage module 260 may also include two or more pieces of model information corresponding to two or more types of multi-axis robots 10 respectively. The types of multi-axis robots 10 may include a multi-axis robot of any type as long as it can be controlled by the second controller 200. For example, the types of multi-axis robots 10 may include a horizontally articulated robot, a parallel linked robot, and the like in addition to the serial linked vertically articulated robot described above.

The communication module 220 (a first communication module) inputs and outputs information to and from the first controller 100. The communication module 230 (a second communication module) inputs and outputs information to and from a terminal device 40. The terminal device 40 is used for registering the coordinate conversion programs.

The power output module 250 outputs driving power to two or more joint axes J1 to J6 of the multi-axis robot 10.

The control processing module 240 is configured to acquire program designation information for designating one of two or more coordinate conversion programs from the first controller 100 via the communication module 120, configured to acquire an operation command (the above first operation command) in the coordinate system for the first controller 100 from the first controller 100 via the communication module 120, configured to convert the first operation command to an operation target value of two or more joint axes J1 to J6 of the multi-axis robot 10 using the coordinate conversion programs according to the program designation information, and configured to output driving power according to the operation target value to the joint axes J1 to J6 via the power output module 250. The control processing module 240 may further be configured to acquire the coordinate conversion programs from the terminal device 40 via the communication module 230 to store it in the program storage module 210.

For example, the control processing module 240 includes a command acquisition module 241, a program setting module 242, a coordinate conversion module 243, an output processing module 244, and a program acquisition module 245 as further divided functional modules.

The command acquisition module 241 acquires a command relating to the control of the multi-axis robot 10, such as the first operation command, from the first controller 100 via the communication module 220.

The program setting module 242 acquires the program designation information from the first controller 100 via the communication module 120 to select one of the coordinate conversion programs stored in the program storage module 210 according to the program designation information.

Using the coordinate conversion programs selected by the program setting module 242, the coordinate conversion module 243 converts the first operation command to the operation target value of the joint axes J1 to J6 of the multi-axis robot 10. Using the coordinate conversion programs selected by the program setting module 242, the coordinate conversion module 243, for example, converts the first operation command in the first coordinate system to the operation command in the second coordinate system, and generates the operation target value of the joint axes J1 to J6 by an inverse kinematics calculation using the operation command and the model information stored in the model information storage module 260.

The output processing module 244 outputs driving power according to the operation target value generated by the coordinate conversion module 243 to the joint axes J1 to J6 via the power output module 250.

The program acquisition module 245 acquires the coordinate conversion programs from the terminal device 40 via the communication module 230 to store it in the program storage module 210.

The third controller 300 is, for example, a servo controller, and controls the servomotor 21 so as to operate the peripheral device 20 in accordance with the second operation command output from the first controller 100.

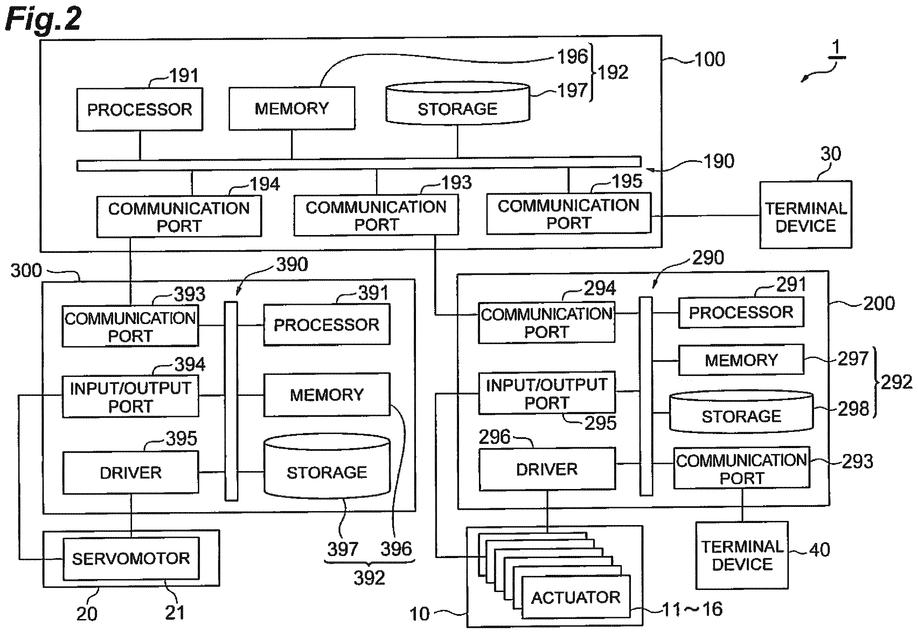

FIG 2 is a block diagram showing a hardware configuration of a control system. As shown in FIG. 2, the first controller 100 includes a circuit 190. The circuit 190 includes one or more processors 191, a storage module 192, and communication ports 193, 194, and 195.

The storage module 192 includes a memory 196 and a storage 197. The storage 197 functions as the motion storage module 110 and records a program used to configure each functional module of the control processing module 150. The storage 197 may be any unit as long as it is computer readable. Specific examples of the storage 197 include a hard disk, a nonvolatile semiconductor memory, a magnetic disk, an optical disk, and the like. The memory 196 temporarily stores the program loaded from the storage 197, the results calculated by the processors 191, and the like. The processors 191 executes programs in cooperation with the memory 196, thereby constituting each functional module of the control processing module 150. That is, the processors 191 function as the control processing module 150.

The communication port 193 performs information communication (for example, high-speed serial communication) with the communication port 294 (described later) of the second controller 200 in accordance with a command from the processors 191. The communication port 193 functions as the communication module 120.

The communication port 194 performs information communication (for example, high-speed serial communication) with the communication port 393 (described later) of the third controller 300 in accordance with a command from the processors 191. The communication port 194 functions as the communication module 130.

The communication port 195 performs information communication (for example, high-speed serial communication) with the terminal device 30 in accordance with a command from the processors 191. The communication port 195 functions as the communication module 140.

The second controller 200 includes a circuit 290. The circuit 290 includes one or more processors 291, a storage module 292, communication ports 293 and 294, an input/output port 295, and a driver 296.

The storage module 292 includes a memory 297 and a storage 298. The storage 298 functions as the program storage module 210 and the model information storage module 260, and records a program used to configure each functional module of the control processing module 240. The storage 298 may be any unit as long as it is computer readable. Specific examples of the storage 197 include a hard disk, a nonvolatile semiconductor memory, a magnetic disk, an optical disk, and the like. The memory 297 temporarily stores the program loaded from the storage 298, the results calculated by the processor 291, and the like. The processor 291 executes programs in cooperation with the memory 297, thereby constituting each functional module of the control processing module 240. That is, the processor 291 functions as the control processing module 240.

The communication port 294 performs information communication with the communication port 193 of the first controller 100 in accordance with a command from the processor 291. The communication port 294 functions as the communication module 220.

The communication port 293 performs information communication (for example, high-speed serial communication) with the terminal device 40 in accordance with a command from the processor 291. The communication port 293 functions as the communication module 230.

The input/output port 295 acquires electric signals indicating the angles of the joint axes J1 to J6 from the actuators 11 to 16 in accordance with a command from the processor 291. The driver 296 outputs driving power to the actuators 11 to 16 in accordance with a command from the processor 291. The input/output port 295 functions as the power output module 250.

The third controller 300 includes a circuit 390. The circuit 390 includes one or more processors 391, a storage module 392, a communication port 393, an input/output port 394, and a driver 395.

The storage module 392 includes a memory 396 and a storage 397. The storage 397 records a program for controlling the peripheral device 20. The storage 397 may be any unit as long as it is computer readable. Specific examples of the storage 397 include a hard disk, a nonvolatile semiconductor memory, a magnetic disk, an optical disk, and the like. The memory 396 temporarily stores the program loaded from the storage 397, the calculation result by the processor 391, and the like. The processor 391 executes a program in cooperation with the memory 396 to execute control of the peripheral device 20 in accordance with the second operation command.

The communication port 393 performs information communication with the communication module 130 of the first controller 100 in accordance with a command from the processor 391.

The input/output port 394 acquires an electric signal indicating the rotation angle of the servomotor 21 in accordance with a command from the processor 391. The driver 395 outputs driving power to the servomotor 21 in accordance with a command from the processor 391.

The hardware configuration of the controller 100, 200, or 300 is not necessarily limited to the configuration in which programs operate each functional block. For example, at least part of the functional modules of the controller 100, 200, or 300 may be constituted by a dedicated logic circuit or an ASIC (Application Specific Integrated Circuit) in which the dedicated logic circuits are integrated.

### [Control Method]

Next, a control processing procedure in the first controller 100, a control processing procedure in the second controller 200, and a procedure for registering the coordinate conversion programs in the second controller 200 will be described as an example of a control method.

### (Control Processing Procedure in First Controller)

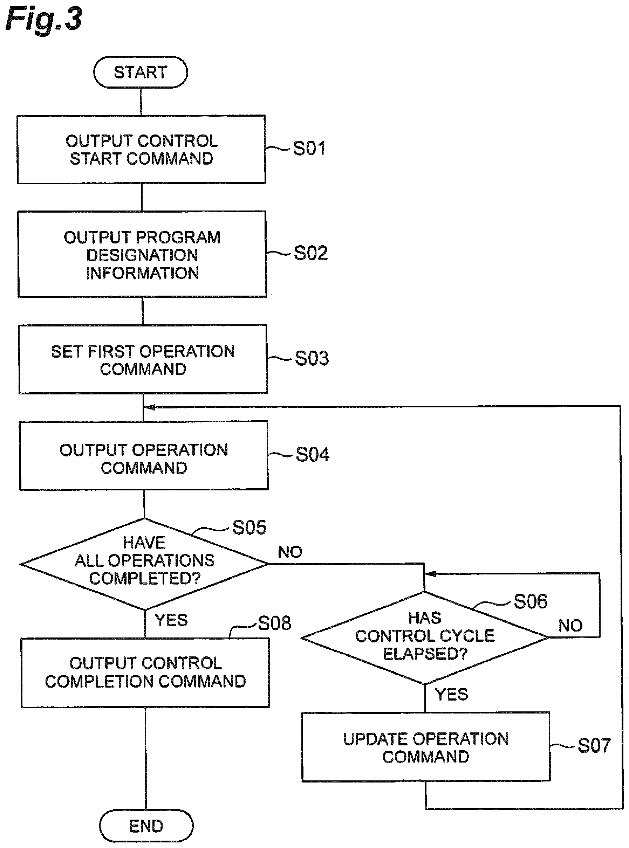

As shown in FIG 3, the first controller 100 first executes step S01. In step S01, the command generation module 151 outputs a start command of the control of the multi-axis robot 10 to the second controller 200 via the command output module 153 and the communication module 120, and outputs a start command of control of the peripheral device 20 to the third controller 300 via the command output module 154 and the communication module 130.

Next, the first controller 100 executes step S02. In step S02, the command generation module 151 acquires the program designation information from the motion information stored in the motion storage module 110, and the program designation module 152 outputs the program designation information to the second controller 200 via the communication module 120.

Next, the first controller 100 executes step S03. In step S03, the command generation module 151 generates a first operation command and a second operation command after the start of the control based on the motion information stored in the motion storage module 110.

Next, the first controller 100 executes step S04. In step S04, the command output module 153 outputs the first operation command generated by the command generation module 151 to the second controller 200 via the communication module 120, and the command output module 154 outputs the second operation command generated by the command generation module 151 to the third controller 300 via the communication module 130.

Next, the first controller 100 executes step S05. In step S05, the command generation module 151 checks whether the output of all the operation commands defined by the motion information has been completed.

In a case where determining in step S05 that the operation command to be output remains, the first controller 100 executes step S06. In step S06, the command generation module 151 waits for the elapse of the control cycle.

Next, the first controller 100 executes step S07. In step S07, the command generation module 151 generates a first operation command and a second operation command for the next control cycle based on the motion information stored in the motion storage module 110.

Thereafter, the first controller 100 returns the process to step S04. Thereafter, the output of the first operation command, the output of the second operation command, and the update of the operation command are repeated in the control cycle until the output of all operation commands is completed.

In a case where determining in step S05 that output of all the operation commands have been completed, the first controller 100 executes step S08. In step S08, the command generation module 151 outputs a completion command of control of the multi-axis robot 10 to the second controller 200 via the command output module 153 and the communication module 120, and outputs a completion command of control of the peripheral device 20 to the third controller 300 via the command output module 154 and the communication module 130. The control processing procedure in the first controller 100 is thus completed.

### (Control Processing Procedure in Second Controller)

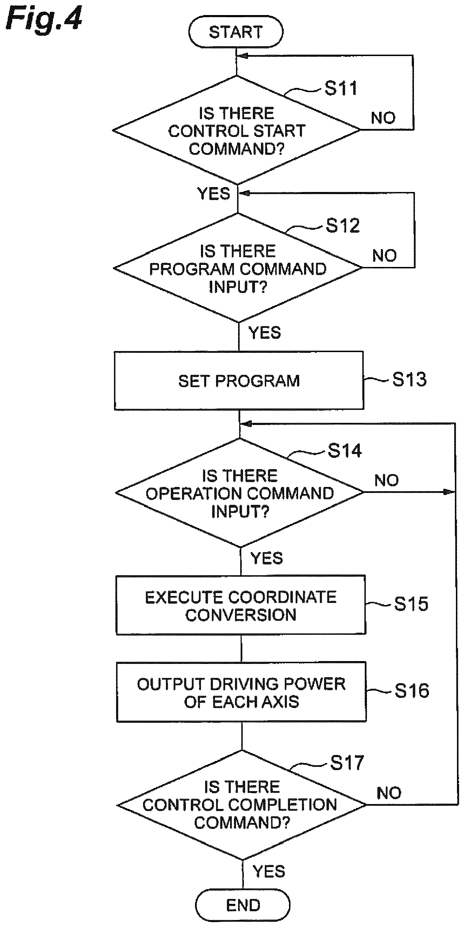

As shown in FIG. 4, the second controller 200 first executes step S11. In step S11, the command acquisition module 241 checks the reception status of the command from the communication module 120 to the communication module 220, and waits for the input of a start command of control of the multi-axis robot 10.

Next, the second controller 200 executes step S12. In step S12, the program setting module 242 checks the reception status of the command from the communication module 120 to the communication module 220, and waits for the input of the program designation information.

Next, the second controller 200 executes step S13. In step S13, the program setting module 242 acquires the program designation information from the first controller 100 via the communication module 220 to select one of the coordinate conversion programs stored in the program storage module 210 according to the program designation information.

Next, the second controller 200 executes step S14. In step S14, the command acquisition module 241 checks the reception status of the command from the communication module 120 to the communication module 220, and waits for the input of the first operation command.

Next, the second controller 200 executes step S15. In step S15, the command acquisition module 241 acquires the first operation command. Thereafter, using the coordinate conversion programs selected by the program setting module 242, the coordinate conversion module 243 converts the first operation command to the operation target value of the joint axes J1 to J6 of the multi-axis robot 10. Using the coordinate conversion programs selected by the program setting module 242, the coordinate conversion module 243, for example, converts the first operation command in the first coordinate system to the operation command in the second coordinate system, and generates the operation target values of the joint axes J1 to J6 by an inverse kinematics calculation using the operation command and the model information stored in the model information storage module 260.

Next, the second controller 200 executes step S16. In step S16, the output processing module 244 outputs driving power according to the operation target value generated by the coordinate conversion module 243 to the joint axes J1 to J6 via the power output module 250.

Next, the second controller 200 executes step S17. In step S17, the command acquisition module 241 checks the reception status of the command from the communication module 120 to the communication module 220, and checks whether the completion command of control of the multi-axis robot 10 has been input.

In a case where determining in step S17 that the completion command has not been input, the second controller 200 returns the process to step S14. Thereafter, the acquisition of the first operation command, the coordinate conversion, and the output of the driving power are repeated in the control cycle until the completion command is received.

In a case where determining in step S17 that the completion command has been received, the second controller 200 completes the process. The control processing procedure in the second controller 200 is thus completed.

### (Procedure for Registering Coordinate Conversion Programs in Second Controller)

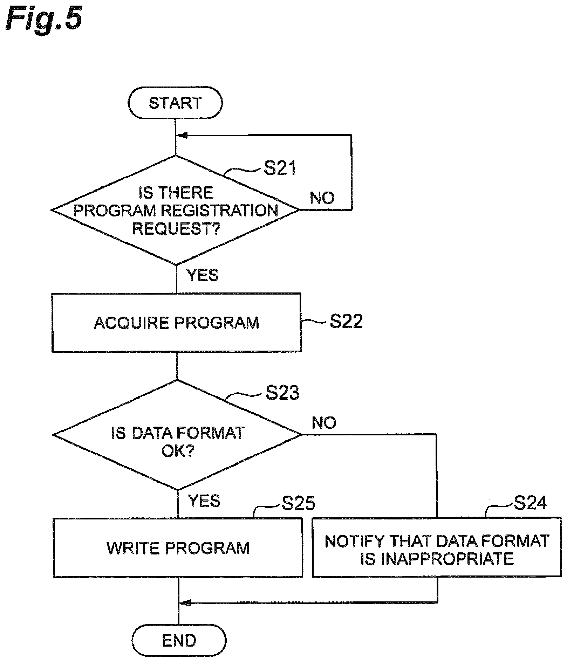

As shown in FIG. 5, the second controller 200 first executes step S21. In step S21, the program acquisition module 245 checks the reception status of data from the terminal device 40 to the communication module 230, and waits for the input of a registration request for the coordinate conversion program.

Next, the second controller 200 executes step S22. In step S22, the program acquisition module 245 acquires the coordinate conversion programs from the terminal device 40.

Next, the second controller 200 executes step S23. In step S23, the program acquisition module 245 checks whether the data format of the acquired program is a format available in the coordinate conversion module 243. For example, the program acquisition module 245 checks whether the form of an arguments of the program matches the data format of the first coordinate system, whether the number of output data of the program matches the data format of the second coordinate system, and the like.

In a case where determining in step S23 that the program data format is not available in the coordinate conversion module 243, the second controller 200 executes step S24. In step S24, the program acquisition module 245 outputs to the terminal device 40 a message notifying that the data format is inappropriate.

In a case where determining in step S23 that the program data format is available in the coordinate conversion module 243, the second controller 200 executes step S25. In step S25, the program acquisition module 245 stores the acquired program in the program storage module 210. The acquisition processing of the coordinate conversion programs is thus completed.

### [Effects of the Embodiment]

As described above, the control system 1 includes the first controller 100 configured to control two or more controlled objects, and the second controller 200 configured to control the multi-axis robot 10 in accordance with a command from the first controller 100. The second controller 200 includes the power output module 250 configured to output driving power to the joint axes J1 to J6 of the multi-axis robot 10, the program storage module 210 configured to store the coordinate conversion programs, the communication module 220 configured to input and output information to and from the first controller 100, and the control processing module 240 configured to acquire program designation information for designating one of the coordinate conversion programs from the first controller 100 via the communication module 220, configured to acquire a first operation command in the coordinate system for the first controller 100 from the first controller 100 via the communication module 220, configured to convert the first operation command to the operation target value of the joint axes J1 to J6 of the multi-axis robot 10 using the coordinate conversion programs according to the program designation information, and configured to output the driving power according to the operation target value to the joint axes J1 to J6 via the power output module 250.

In a case where operation programming of the multi-axis robot 10 is executed with the second controller 200, the user interface for the programming is limited to the user interface of the second controller 200. There may be provided a method of enabling operation programming of the multi-axis robot 10 with a user interface of the first controller 100 in which a conversion program for automatically converting the input content for the user interface of the first controller 100 to the input content for the user interface of the second controller 200 is installed. However, there are limitations to preparing such a conversion program for each type of user interface of the first controller 100.

In contrast, in this control system, the control processing module 240 of the second controller 200 acquires the program designation information and the first operation command from the first controller 100, converts the operation command to the operation target value of the joint axes J1 to J6 of the multi-axis robot 10 using the coordinate conversion programs according to the program designation information, and outputs driving power according to the operation target value to the joint axes J1 to J6 via the power output module 250. Therefore, as long as the program designation information and the first operation command are output, it is possible to execute operation programming of the multi-axis robot 10 with the first controller 100 regardless of the type of the user interface. Further, the program designation information allows the coordinate conversion programs according to the type of the multi-axis robot 10 to be designated, enabling operation programming of various multi-axis robots 10. Therefore, this control system is effective in enabling operation programming of various robots with various user interfaces.

The second controller 200 further includes the communication module 230 for inputting and outputting information to and from the terminal device 40, and the control processing module 240 may further be configured to acquire the coordinate conversion programs from the terminal device 40 via the communication module 230 to store it in the program storage module 210. In this case, allowing the coordinate conversion programs to be additionally registered makes it possible to execute operation programming of more various robots.

Two or more coordinate conversion programs may include a coordinate conversion program programmed by a second programming language different from the first programming language for programming the content of control of the first controller 100. By using a language suitable for local processing in the second controller 200 as the second programming language without being bound by the first programming language the speed and efficiency of the coordinate conversion may be increased.

The plurality of coordinate conversion programs may include two or more coordinate conversion programs corresponding to two or more types of first controllers 100 having different coordinate systems respectively. Accordingly, operation programming of a robot with more various user interfaces may be executed.

The coordinate conversion programs may include two or more coordinate conversion programs corresponding to two or more types of multi-axis robots 10 respectively. Accordingly, operation programming of a variety of different robots may be executed.

## Claims

1. A robot controller (200) communicable with a first controller (100), the first controller (100) being configured to provide operation commands to a plurality of controllers including the robot controller (200) that operate using different coordinate systems, the robot controller (200) comprising:
a power output module (250) configured to output driving power to two or more joint axes (J1, J2, J3, J4, J5, J6) of a multi-axis robot (10);
**characterized by**
a storage module (210) configured to store two or more coordinate conversion programs,
wherein each of the coordinate conversion programs is configured to convert a first operation command defined in a coordinate system for the first controller (100) to one or more operation target values of the joint axes of the multi-axis robot;
a first communication module (220) configured to input and output information to and from the first controller (100); and
a control processing module (240) configured to:
- acquire, via the first communication module (220), an operation command and program designation information from the first controller (100), wherein the operation command is defined in the coordinate system for the first controller (100), and wherein the program designation information designates one of the coordinate conversion programs stored in the storage module (210),
- convert the operation command to one or more operation target values of the joint axes (J1, J2, J3, J4, J5, J6) of the multi-axis robot (10) based on the designated coordinate conversion program designated by the program designation information, and
- output the driving power according to the one or more operation target values to the joint axes (J1, J2, J3, J4, J5, J6) via the power output module (250).

2. The robot controller (200) according to claim 1, further comprising a second communication module (230) configured to input and output information to and from a terminal device (40),
wherein the control processing module (240) is further configured to acquire a coordinate conversion program from the terminal device (40) via the second communication module (230) to store the coordinate conversion programs in the storage module (210).

3. The robot controller (200) according to claim 1 or 2, wherein the coordinate conversion programs includes a coordinate conversion program programmed in a second programming language different from a first programming language for programming a content of control of the first controller.

4. The robot controller (200) according to any one of claims 1 to 3, wherein the coordinate conversion programs includes coordinate conversion programs corresponding to two or more types of first controllers, including the first controller (100), having mutually different coordinate systems respectively.

5. The robot controller (200) according to any one of claims 1 to 4, wherein the coordinate conversion programs includes two or more coordinate conversion programs corresponding to two or more types of multi-axis robots, including the multi-axis robot (10), respectively.

6. A robot control system (1) comprising:
the first controller (100);
the robot controller (200) according to any one of claims 1 to 5.

7. A robot control method performed by a robot controller (200) configured to control a multi-axis robot (10) in accordance with a command received from a first controller (100), the first controller (100) being configured to control two or more controlled objects (10, 20) and to provide operation commands to a plurality of controllers including the robot controller (200) that operate using different coordinate systems, the robot control method comprising:
storing, in a storage module (210) of the robot controller (200), two or more coordinate conversion programs, wherein each of the coordinate conversion programs converts a first operation command defined in a coordinate system of the first controller (100) to one or more operation target values of the joint axes of the multi-axis robot;
acquiring, by a control processing module (240) of the robot controller (200), an operation command and program designation information from the first controller (100), wherein the operation command is defined in the coordinate system for the first controller (100), and
wherein the program designation information designates one of the coordinate conversion programs stored in the storage module (210);
converting, by the control processing module (240), the operation command to one or more operation target values of a plurality of joint axes (J1, J2, J3, J4, J5, J6) of the multi-axis robot (10) based on the designated coordinate conversion program designated by the program designation information; and
outputting driving power to the joint axes (J1, J2, J3, J4, J5, J6) according to the one or more operation target values.

8. The robot control method according to claim 7, further comprising acquiring and storing the coordinate conversion programs from a terminal device (40) by the robot controller (200).

9. The robot control method according to claim 7 or 8, wherein the coordinate conversion programs include a coordinate conversion program programmed by a second programming language different from a first programming language for programming a content of control of the first controller (100).

10. The robot control method according to any one of claims 7 to 9, wherein the coordinate conversion programs includes coordinate conversion programs corresponding to two or more types of first controllers, including the first controller (100), having mutually different coordinate systems respectively.

11. The robot control method according to any one of claims 7 to 10, wherein the plurality of coordinate conversion programs includes two or more coordinate conversion programs corresponding to two or more multi-axis robots, including the multi-axis robot (10), respectively.

## Patentansprüche

1. Robotersteuerung (200), die mit einer ersten Steuerung (100) kommunizieren kann, wobei die erste Steuerung (100) dafür konfiguriert ist, Arbeitsbefehle für mehrere Steuerungen einschließlich der Robotersteuerung (200), die unter Verwendung von verschiedenen Koordinatensystemen arbeiten, bereitzustellen, wobei die Robotersteuerung (200) umfasst:
ein Leistungsausgabemodul (250), das dafür konfiguriert ist, eine Antriebsleistung an zwei oder mehr gemeinsame Achsen bzw. Gelenksachsen (J1, J2, J3, J4, J5, J6) eines mehrachsigen Roboters (10) auszugeben;
**gekennzeichnet durch**
ein Speichermodul (210), das dafür konfiguriert ist, zwei oder mehr Koordinatenumwandlungsprogramme zu speichern, wobei jedes der Koordinatenumwandlungsprogramme dafür konfiguriert ist, einen ersten Arbeitsbefehl, der in einem Koordinatensystem für die erste Steuerung (100) definiert ist, in einen oder mehrere Arbeitszielwerte der gemeinsamen Achsen bzw. Gelenksachsen des mehrachsigen Roboters umzuwandeln;
ein erstes Kommunikationsmodul (220), das dafür konfiguriert ist, Information in die erste Steuerung (100) einzugeben und von dieser auszugeben; und
ein Steuerverarbeitungsmodul (240), das konfiguriert ist zum:
über das erste Kommunikationsmodul (220) erfolgenden Beziehen eines Arbeitsbefehls und einer Programmbenennungsinformation von der ersten Steuerung (100), wobei der Arbeitsbefehl in dem Koordinatensystem für die erste Steuerung (100) definiert ist und wobei die Programmbenennungsinformation eines der Koordinatenumwandlungsprogramme, die in dem Speichermodul (210) gespeichert sind, benennt,
Umwandeln des Arbeitsbefehls in einen oder mehrere Arbeitszielwerte der gemeinsamen Achsen bzw. Gelenksachsen (J1, J2, J3, J4, J5, J6) des mehrachsigen Roboters (10) auf Grundlage des benannten Koordinatenumwandlungsprogramms, das von der Programmbenennungsinformation benannt wird, und
Ausgeben der Antriebsleistung entsprechend dem einen oder den mehreren Arbeitszielwerten an die gemeinsamen Achsen bzw. Gelenksachsen (J1, J2, J3, J4, J5, J6) über das Leistungsausgabemodul (250).

2. Robotersteuerung (200) nach Anspruch 1, des Weiteren umfassend ein zweites Kommunikationsmodul (230), das dafür konfiguriert ist, Information in eine Endgerätvorrichtung (40) einzugeben und von dieser auszugeben,
wobei das Steuerverarbeitungsmodul (240) des Weiteren dafür konfiguriert ist, ein Koordinatenumwandlungsprogramm von der Endgerätvorrichtung (40) über das zweite Kommunikationsmodul (230) zu beziehen, um die Koordinatenumwandlungsprogramme in dem Speichermodul (210) zu speichern.

3. Robotersteuerung (200) nach Anspruch 1 oder 2, wobei die Koordinatenumwandlungsprogramme ein Koordinatenumwandlungsprogramm beinhalten, das in einer zweiten Programmiersprache programmiert ist, die von einer ersten Programmiersprache zum Programmieren eines Steuerinhalts der ersten Steuerung verschieden ist.

4. Robotersteuerung (200) nach einem der Ansprüche 1 bis 3, wobei die Koordinatenumwandlungsprogramme Koordinatenumwandlungsprogramme beinhalten, die jeweils zwei oder mehr Typen von ersten Steuerungen einschließlich der ersten Steuerung (100), die wechselseitig verschiedene Koordinatensysteme aufweisen, entsprechen.

5. Robotersteuerung (200) nach einem der Ansprüche 1 bis 4, wobei die Koordinatenumwandlungsprogramme zwei oder mehr Koordinatenumwandlungsprogramme beinhalten, die jeweils zwei oder mehr Typen von mehrachsigen Robotern einschließlich des mehrachsigen Roboters (10) entsprechen.

6. Robotersteuersystem (1), umfassend:
die erste Steuerung (100);
die Robotersteuerung (200) nach einem der Ansprüche 1 bis 5.

7. Robotersteuerverfahren, das von einer Robotersteuerung (200) durchgeführt wird, die dafür konfiguriert ist, einen mehrachsigen Roboter (10) entsprechend einem Befehl, der von einer ersten Steuerung (100) empfangen wird, zu steuern, wobei die erste Steuerung (100) dafür konfiguriert ist, zwei oder mehr gesteuerte Objekte (10, 20) zu steuern und Arbeitsbefehle für mehrere Steuerungen einschließlich der Robotersteuerung (200), die unter Verwendung von verschiedenen Koordinatensystemen arbeiten, bereitzustellen, wobei das Robotersteuerverfahren umfasst:
in einem Speichermodul (210) der Robotersteuerung (200) erfolgendes Speichern von zwei oder mehr Koordinatenumwandlungsprogrammen, wobei jedes der Koordinatenumwandlungsprogramme einen ersten Arbeitsbefehl, der in einem Koordinatensystem der ersten Steuerung (100) definiert ist, in einen oder mehrere Arbeitszielwerte der gemeinsamen Achsen bzw. Gelenkachsen des mehrachsigen Roboters umwandelt;
durch ein Steuerverarbeitungsmodul (240) der Robotersteuerung (200) erfolgendes Beziehen eines Arbeitsbefehls und einer Programmbenennungsinformation von der ersten Steuerung (100), wobei der Arbeitsbefehl in dem Koordinatensystem für die erste Steuerung (100) definiert ist und wobei die Programmbenennungsinformation eines der Koordinatenumwandlungsprogramme, die in dem Speichermodul (210) gespeichert sind, benennt;
durch das Steuerverarbeitungsmodul (240) erfolgendes Umwandeln des Arbeitsbefehls in einen oder mehrere Arbeitszielwerte mehrerer gemeinsamer Achsen bzw. Gelenksachsen (J1, J2, J3, J4, J5, J6) des mehrachsigen Roboters (10) auf Grundlage des benannten Koordinatenumwandlungsprogramms, das von der Programmbenennungsinformation benannt wird; und
Ausgeben einer Antriebsleistung an die gemeinsamen Achsen bzw. Gelenksachsen (J1, J2, J3, J4, J5, J6) entsprechend dem einen oder den mehreren Arbeitszielwerten.

8. Robotersteuerverfahren nach Anspruch 7, des Weiteren umfassend ein Beziehen und Speichern der Koordinatenumwandlungsprogramme von einer Endgerätvorrichtung (40) durch die Robotersteuerung (200).

9. Robotersteuerverfahren nach Anspruch 7 oder 8, wobei die Koordinatenumwandlungsprogramme ein Koordinatenumwandlungsprogramm beinhalten, das in einer zweiten Programmiersprache programmiert ist, die von einer ersten Programmiersprache zum Programmieren eines Steuerinhalts der ersten Steuerung (100) verschieden ist.

10. Robotersteuerverfahren nach einem der Ansprüche 7 bis 9, wobei die Koordinatenumwandlungsprogramme Koordinatenumwandlungsprogramme beinhalten, die jeweils zwei oder mehr Typen von ersten Steuerungen einschließlich der ersten Steuerung (100), die wechselseitig verschiedene Koordinatensysteme aufweisen, entsprechen.

11. Robotersteuerverfahren nach einem der Ansprüche 7 bis 10, wobei die mehreren Koordinatenumwandlungsprogramme zwei oder mehr Koordinatenumwandlungsprogramme beinhalten, die jeweils zwei oder mehr mehrachsigen Robotern einschließlich des mehrachsigen Roboters (10) entsprechen.

## Revendications

1. Contrôleur de robot (200) pouvant communiquer avec un premier contrôleur (100), le premier contrôleur (100) étant configuré pour fournir des commandes de fonctionnement à une pluralité de contrôleurs incluant le contrôleur de robot (200) qui fonctionnent au moyen de différents systèmes de coordonnées, le contrôleur de robot (200) comprenant :
un module de production de puissance (250) configuré pour produire une puissance d'entraînement vers deux axes d'articulation ou plus (J1, J2, J3, J4, J5, J6) d'un robot multi-axe (10) ;
**caractérisé par**
un module de stockage (210) configuré pour stocker deux programmes de conversion de coordonnées ou plus,
dans lequel chacun des programmes de conversion de coordonnées est configuré pour convertir une première commande de fonctionnement définie dans un système de coordonnées pour le premier contrôleur (100) en une ou plusieurs valeurs cible de fonctionnement des axes d'articulation du robot multi-axe ;
un premier module de communication (220) configuré pour faire entrer et sortir des informations dans le et hors du premier contrôleur (100) ; et
un module de traitement de commande (240) configuré pour :
acquérir, via le premier module de communication (220), une commande de fonctionnement et des informations de désignation de programme auprès du premier contrôleur (100), dans lequel la commande de fonctionnement est définie dans le système de coordonnées pour le premier contrôleur (100), et dans lequel les informations de désignation de programme désignent un des programmes de conversion de coordonnées stockés dans le module de stockage (210),
convertir la commande de fonctionnement en une ou plusieurs valeurs cible de fonctionnement des axes d'articulation (J1, J2, J3, J4, J5, J6) du robot multi-axe (10) selon le programme de conversion de coordonnées désigné, désigné par les informations de désignation de programme, et
produire la puissance d'entraînement selon l'une ou plusieurs valeurs cible de fonctionnement vers les axes d'articulation (J1, J2, J3, J4, J5, J6) via le module de production de puissance (250).

2. Le contrôleur de robot (200) selon la revendication 1, comprenant en outre un deuxième module de communication (230) configuré pour faire entrer et sortir des informations dans un et hors d'un dispositif terminal (40),
dans lequel le module de traitement de commande (240) est configuré en outre pour acquérir un programme de conversion de coordonnées auprès du dispositif terminal (40) via le deuxième module de communication (230) pour stocker les programmes de conversion de coordonnées dans le module de stockage (210).

3. Le contrôleur de robot (200) selon la revendication 1 ou 2, dans lequel les programmes de conversion de coordonnées incluent un programme de conversion de coordonnées programmé dans un deuxième langage de programmation différent d'un premier langage de programmation pour programmer un contenu de commande du premier contrôleur.

4. Le contrôleur de robot (200) selon l'une quelconque des revendications 1 à 3, dans lequel les programmes de conversion de coordonnées incluent des programmes de conversion de coordonnées correspondant à deux types de premiers contrôleurs ou plus, incluant le premier contrôleur (100), présentant des systèmes de coordonnées mutuellement différents respectivement.

5. Le contrôleur de robot (200) selon l'une quelconque des revendications 1 à 4, dans lequel les programmes de conversion de coordonnées incluent deux programmes de conversion de coordonnées ou plus correspondant à deux types de robots multi-axes ou plus, incluant le robot multi-axe (10), respectivement.

6. Système de contrôle de robot (1) comprenant :
le premier contrôleur (100) ;
le contrôleur de robot (200) selon l'une quelconque des revendications 1 à 5.

7. Procédé de contrôle de robot exécuté par un contrôleur de robot (200) configuré pour contrôler un robot multi-axe (10) selon une commande reçue d'un premier contrôleur (100), le premier contrôleur (100) étant configuré pour contrôler deux objets contrôlés ou plus (10, 20) et pour fournir des commandes de fonctionnement à une pluralité de contrôleurs incluant le contrôleur de robot (200) qui fonctionnent en utilisant des systèmes de coordonnées différents, le procédé de contrôle de robot comprenant :
un stockage, dans le module de stockage (210) du contrôleur de robot (200), de deux programmes de conversion de coordonnées ou plus, dans lequel chacun des programmes de conversion de coordonnées convertit une première commande de fonctionnement définie dans un système de coordonnées du premier contrôleur (100) en une ou plusieurs valeurs cible de fonctionnement des axes d'articulation du robot multi-axe ;
une acquisition, par le module de traitement de commande (240) du contrôleur de robot (200), d'une commande de fonctionnement et d'informations de désignation de programme auprès du premier contrôleur (100), dans lequel la commande de fonctionnement est définie dans le système de coordonnées pour le premier contrôleur (100), et
dans lequel les informations de désignation de programme désignent un des programmes de conversion de coordonnées stockés dans le module de stockage (210) ;
une conversion, par le module de traitement de commande (240), de la commande de fonctionnement en une ou plusieurs valeurs cible de fonctionnement d'une pluralité d'axes d'articulation (J1, J2, J3, J4, J5, J6) du robot multi-axe (10) selon le programme de conversion de coordonnées désigné, désigné par les informations de désignation de programme ; et
une production d'une puissance d'entraînement vers les axes d'articulation (J1, J2, J3, J4, J5, J6) selon l'une ou plusieurs valeurs cible de fonctionnement.

8. Le procédé de contrôle de robot selon la revendication 7, comprenant en outre une acquisition et un stockage des programmes de conversion de coordonnées issus d'un dispositif terminal (40) par le contrôleur de robot (200).

9. Le procédé de contrôle de robot selon la revendication 7 ou 8, dans lequel les programmes de conversion de coordonnées incluent un programme de conversion de coordonnées programmé par un deuxième langage de programmation différent d'un premier langage de programmation pour programmer un contenu de commande du premier contrôleur (100).

10. Le procédé de contrôle de robot selon l'une quelconque des revendications 7 à 9, dans lequel les programmes de conversion de coordonnées incluent des programmes de conversion de coordonnées correspondant à deux types de premiers contrôleurs ou plus, incluant le premier contrôleur (100), présentant des systèmes de coordonnées mutuellement différents respectivement.

11. Le procédé de contrôle de robot selon l'une quelconque des revendications 7 à 10, dans lequel la pluralité de programmes de conversion de coordonnées incluent deux programmes de conversion de coordonnées ou plus correspondant à deux types de robots multi-axes ou plus, incluant le robot multi-axe (10), respectivement.
